# EUROPEAN PATENT APPLICATION

(11) **EP 2 255 929 A1**
(43) Date of publication of application: **01.12.2010**
(21) Application number: 09425211.1
(22) Date of filing: 28.05.2009
(51) Int. Cl.: B25J 9/10, B23Q 1/62, B23Q 5/34, F16H 25/16

(54) **Globular cam driver device for manipulators**

(71) Applicant: Tes S.p.A., 66020 San Giovanni Teatina (CH) (IT)
(72) Inventor: Mancini, Roberto, 65129 Pescara (IT); Salerni, Roberto, 65128 Pescara (IT)
(74) Representative: Ripamonti, Enrico

(57) **Abstract**

A driving device of a mobile member (57) associated to an operating organ (60) of a manipulator or similar organ comprises an actuator (13) of the motion of a shaft (A) thereon two cam organs (15, 16) are fitted together, apt to guide the motion of guided members (20, 21) associated to sets of levers (27, 30) connected to cursor organs (40, 41) mobile along Cartesian axes orthogonal therebetween and connected to the above-mentioned mobile member (57), the cam organs (15, 16) being associated to said shaft (A), along the side surface thereof said guided members (20, 21) move; each cam organ (15, 16) is associated to one single set of levers (27, 30) and the motion of the corresponding guided member (20, 21) along a profile (17) of the corresponding cam organ (15, 16) involves a corresponding motion of the mobile member (57) along one of the Cartesian axes.

## Description

The object of the present invention is a driving device of a mobile member of a manipulator, according to the preamble of the main claim.

As it is known, in the manipulators' industry driving devices are requested apt to allow the guided and controlled motion of organs apt to carry out determined operations such as, for example, the pick-up and/or the putting down of a component in a productive line, the assembly of components of more complex organs, etc. Usually, such devices use cam organs along the profiles thereof members move, which are guided associated to sets of levers connected to cursor organs mobile along two orthogonal axes of a Cartesian plane and thereto a member supporting a corresponding operating member is associated. Such device is described, for example, in WO00/29174.

In the above-mentioned text of the state of art the cam organ is defined by a hollow cylinder having opposed upper and lower ends shaped with cam profile. Along such opposed ends pairs of rollers slide, each one associated to a set of levers functionally cooperating with an operating organ. In the known solution, then, a cylindrical single body has cam profiles at the ends thereof; each set of levers cooperates with both cam profiles in order to have the motion controlled and guided by the operating organ.

However, as it is known, in the field of the manipulators and in particular of the automatic assembly, often one has to cope with components with small sizes requiring, at the end of the assembly, precise and repetitive motions according to trajectories and speeds which vary depending upon the specific application.

Therefore, for the driving devices of the manipulator, some aspects result to have basic importance, such as flexibility (in order to be able to vary quickly the above-mentioned trajectories and speeds) and compactness (for an adequate insertion thereof in the production line).

However, such aspects apparently are not achieved by the known devices. For example, in the prior text WO00/29174 mentioned above, there is no possibility of quickly replacing the cam organ (hollow cylinder) both due to the shape thereof and connection to sets of levers, furthermore the known solution provides an arrangement of the cam organ which penalizes the device compactness, which then results to have not negligible and little compact sizes.

Therefore, the object of the present invention is to offer a driving device for a manipulator which is improved with respect to the analogous known devices.

In particular, the object of the invention is to offer a device of the mentioned type having a flexible use and allowing a quick modification of the motion trajectories and speeds of the manipulator depending upon the operating needs of the latter.

Another object is to offer a device of the mentioned type which is compact so as to allow the easy positioning thereof in a production line.

An additional object is to offer a device of the mentioned type which has a high functionality and, at the same time, which is of low-cost construction.

These and other objects which will be evident to the person skilled in the arm are achieved by a device according to the enclosed claims.

For a better understanding of the present invention the following drawings are enclosed, by simple way of example and not for limitative purposes, wherein:

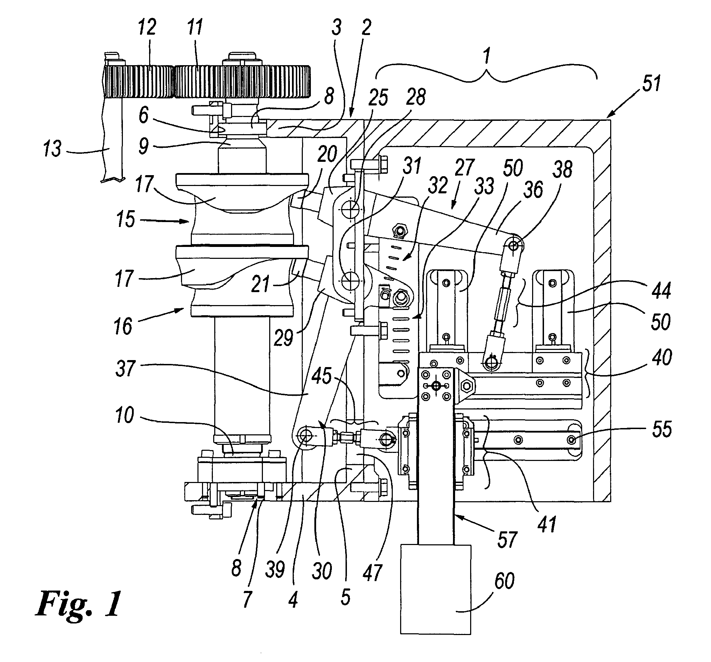

figure 1 shows a front view of an embodiment of the device according to the invention;

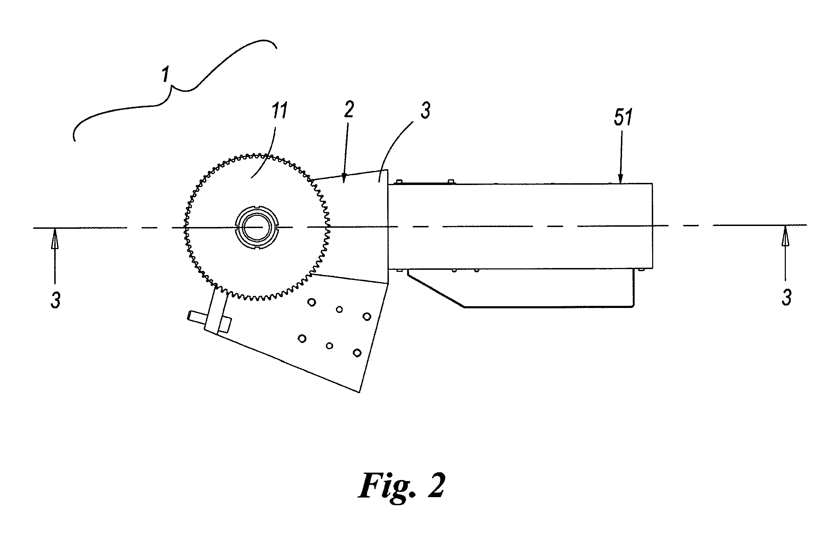

figure 2 shows a top view of the device of figure 1;

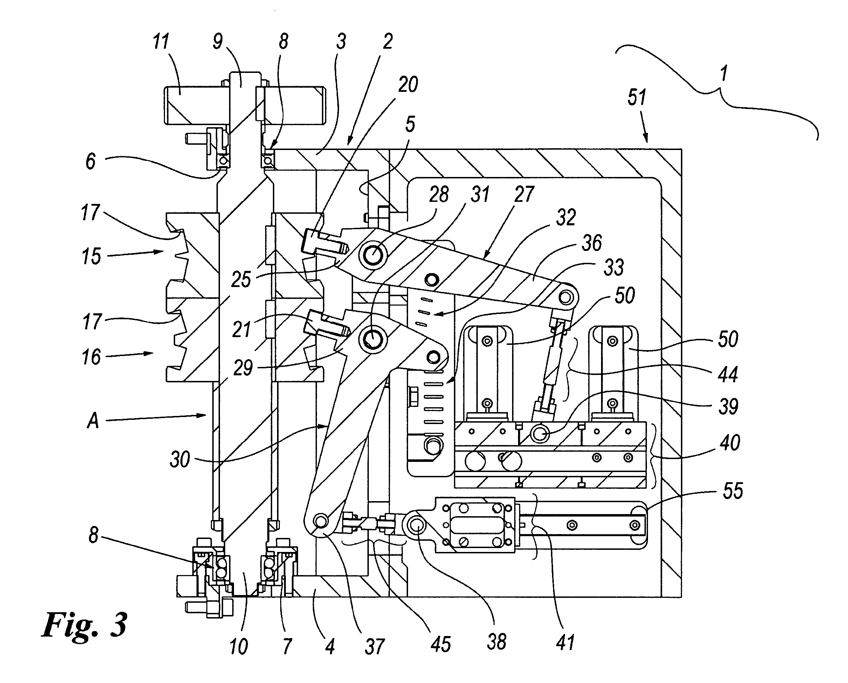

figure 3 shows a cross view according to the trace 3-3 of figure 2.

By referring to the mentioned figures, a device according to the invention is designated as a whole with 1. It is a mechanical device allowing to carry out "pick and place" operations and which, then, can be used in the automatic machines apt to carry out particular operations such as that of assembling components. The device 1 allows transforming a rotating motion of an actuator organ into a motion along a plane of an operating organ.

The device 1 comprises a supporting structure 2 substantially defined by a component having a C-like shape which can be obtained by usual mechanical processings such as melting and/or processing with the machine tools. Such structure 2 comprises two parallel arms, an upper arm 3 and a lower arm 4, connected by an intermediate portion 5.

At such arms 3 and 4, within seats or holes 6 and 7, respectively, bearings 8 (or other equivalent mechanical decoupling organs) are placed fitted together on extremal portions 9, 10 of a shaft A placed parallelly to the intermediate portion 5 of the structure 2. A gear or toothed wheel 11, apt to engage with a gear 12 fitted together on a driving shaft 13 moved in any known way, is fitted together on the extremal portion 9 of the shaft.

Two cam organs 15 and 16 are removably fitted together on the shaft A.

Each one of them, having a shape deriving from a rotation solid, comprises, on a side surface thereof, a cam profile 17 along thereof a member guided by a corresponding roller or bearing 20, 21 moves, said motion taking place with minimum friction.

The bearing or roller 20 is placed at a first end 25 of a corresponding lever 27 pivoted in 28 at the intermediate portion 5 of the structure 2. The bearing 21 is placed at a first end 29 of a lever 30 pivoted in 31 at the portion 5 of the structure 1. Each lever 27, 30 is connected to a spring 32, 33, respectively, connected to the intermediate portion 5 mentioned above; each spring has the function of guaranteeing the continuous contact between roller or bearing member 20, 21 corresponding to the respective profile 17, contrasting the inertia developing during the motion.

Each lever or set of levers has, at its own second end 36, 37, a hinge pin 38, 39 for connecting to such lever a corresponding cursor organ or mobile equipment 40, 41. More in particular, a corresponding end of an adjustable (in length) connecting rod 44, 45 is associated to each pin 38, 39, the connecting rod being hinged at its own other end to the corresponding equipment 40, 41. The connecting rod 45 moves through an opening 47 provided in the portion 5 of the structure 2 therethrough the sets of levers 27, 30 move.

More in particular, the mobile equipment or cursor organ 40 associated to the connecting rod 44 is apt to move along fixed guiding members 50 placed vertically and associated to a support 51 constrained to the structure 2. For example, the coupling between equipment 40 and guides 50 can take place by implementing dovetail portions associated to one of such guiding equipment and adequately shaped corresponding counterportions associated to the other one between equipment and guide. Obviously, several shapes of such portions can be implemented, apt to allow the motion of the equipment 40 along the guides 50. Such motion takes place along an axis Y of a Cartesian plane.

The mobile equipment 41 moves (with modes analogous to those described above for the equipment 40 and the guides 50) along a guide 55 placed orthogonally to the guides 50 and lying along an axis X of a Cartesian plane.

A supporting member 57 is integral to such equipments 40, 41 (by means for example of screws and bolts) apt to support any operating organ (designated with 60), such as a grasping member of a component in a product assembly line.

Thanks to the presence of the equipments 40, 41 the member or support 57 can move (in a way evident from the preceding description and thus not further described) along orthogonal axes (X, Y) of the Cartesian plane, said motion being generated and controlled through the motion of the cam organs 15, 16, moved, in turn, by the actuator defined by the driving shaft 13 and by the gear 12.

With the invention it is possible obtaining a device of flexible and compact use thanks to the arrangement of the cam organs 15 and 16 on the shaft 10, organs which can be easily replaced with other ones having profiles 17 suitable for the different use and motion of the wished operating organ.

## Claims

1. A driving device of a mobile member (57) associated to an operating organ (60) of a manipulator or similar organ comprises an actuator (13) of the motion of a shaft (A) thereon two cam organs (15, 16) are fitted together, apt to guide the motion of guided members (20, 21) associated to sets of levers (27, 30) connected to cursor organs (40, 41) mobile along Cartesian axes orthogonal therebetween and connected to the above-mentioned mobile member (57), the cam organs (15, 16) being associated to said shaft (A), along the side surface thereof said guided members (20, 21) move, **characterized in that** each cam organ (15, 16) is associated to one single set of levers (27, 30) and the motion of the corresponding guided member (20, 21) along a profile (17) of the corresponding cam organ (15, 16) involves a corresponding motion of the mobile member (57) along one of the Cartesian axes.

2. The device of claim 1, **characterized in that** the cam organs (15, 16) are two bodies defined by rotating solids, each one having the profile (17) for the motion of a corresponding guided member (20, 21), said bodies being fitted together on said shaft (A) and being arranged in sequence on the latter.

3. The device of claim 2, **characterized in that** it comprises a structure (2) substantially shaped like a C and having two opposite parallel arms (3, 4) connected by an intermediate portion (5), the shaft (A) supporting the cam organs (15, 16) being connected to such arms (3, 4) by means of mechanical decoupling organs (6, 7), the shaft being placed with longitudinal axis parallel to such intermediate portion (5), the sets of levers (27, 30) connected to the operating organ (60) through the cursor organs and to the mobile member supporting such organ (60) being hinged to such intermediate portion (5).

4. The device of claim 3, **characterized in that** a support (51) for guides (50, 55) is associated to such structure (2), the mobile cursors (40, 41) move along such guides, said guides being placed with axes orthogonal therebetween, the intermediate portion (5) of the above-mentioned structure (2) being placed between said shaft (A) and said guides (50, 51).

5. The device of claim 4, **characterized in that** the intermediate portion (5) has an opening (47) therethrough the sets of levers (27, 30) move and therethrough an adjustable connecting organ (45) is arranged, connecting a set of levers (30) to a corresponding mobile cursor (41), the other cursor (40) being connected to the other set of levers (27) through an analogous adjustable connecting organ (44).

6. The device of claim 2, **characterized in that** said cam organs (15, 16) are removably associated to the corresponding shaft (A).
